# FASCICULE DE BREVET EUROPEEN

(11) **EP 1 775 126 B1**
(45) Date de publication et mention de la délivrance du brevet: **06.04.2016**
(21) Numéro de dépôt: 06291593.9
(22) Date de dépôt: 12.10.2006
(51) Int. Cl.: B41F 15/30

(54) **Dispositif de transfert d'un objet pour machine d'impression, machine d'impression et procédé de transfert**
Übertragungsvorrichtung von Gegenständen für eine Druckmaschine, Druckmaschine und Übertragungsverfahren
Article transfer device for a printing machine, printing machine and transfer process

(30) Priorité: 12.10.2005 FR 0510421
(43) Date de publication de la demande: 18.04.2007
(73) Titulaire: MACHINES DUBUIT, 93160 Noisy le Grand (FR)
(72) Inventeur: Dumenil, François, 77390 Chaumes en Brie (FR)
(74) Mandataire: Blot, Philippe Robert Emile

(56) Documents cités:
- EP-A- 1 543 965
- FR-A- 1 378 101
- FR-A- 2 775 471
- US-A- 4 164 279
- US-A- 5 076 165
- US-A1- 2001 046 436

## Description

La présente invention concerne un dispositif de transfert pour machine d'impression du type comportant un bâti de support, un bras manipulateur porté par le bâti de support et articulé par rapport au bâti de support, autour d'un axe de pivotement, une pince de préhension de l'objet portée par le bras manipulateur et articulée par rapport au bras manipulateur, autour d'un axe de basculement décalé angulairement par rapport à l'axé de pivotement ; et des moyens d'entraînement adaptés pour entraîner en rotation concomitamment le bras manipulateur et la pince de préhension au cours d'une phase de rotation intermédiaire.

Des machines d'impression par sérigraphie sont utilisées pour l'impression répétitive d'objets identiques ayant un axe de révolution.

Dans de telles machines d'impression par sérigraphie, l'impression s'effectue dans un poste d'impression par rotation des objets autour de leur axe de révolution et déplacement concomitant, dans un plan tangentiel aux objets, d'un écran au travers duquel de l'encre est transférée, par pression d'une racle sur l'écran, l'écran étant enserré entre les objets et la racle.

Dans le poste d'impression, les objets sont maintenus et entraînés en rotation par un ensemble de retenue et d'entraînement comprenant un culot de réception du fond de l'objet et une pointe montée mobile axialement par rapport au culot et propre à s'introduire dans le goulot de l'objet.

Les objets à imprimer sont acheminés au voisinage du poste d'impression par un convoyeur d'amenée, puis sont transférés de ce convoyeur jusqu'au poste d'impression par un dispositif de transfert. Par ailleurs, un autre dispositif de transfert symétrique assure le transfert des objets imprimés du poste d'impression vers un convoyeur d'évacuation.

Sur les convoyeurs d'amenée et d'évacuation, les objets à imprimer sont généralement disposés avec une orientation différente de celle des objets dans le poste d'impression.

Plus précisément, lorsque les objets à imprimer sont des flacons, ceux-ci sont posés verticalement sur la surface du convoyeur avec leur axe de révolution disposé perpendiculairement à la surface du convoyeur. Au contraire, dans le poste d'impression, les objets sont disposés avec leur axe de révolution s'étendant généralement horizontalement, c'est-à-dire perpendiculairement à la direction initiale d'orientation des objets sur le convoyeur.

Le dispositif de transfert, interposé entre le convoyeur d'amenée et le poste d'impression, est propre à assurer le déplacement global des objets entre l'extrémité de sortie du convoyeur et l'ensemble de retenue et d'entraînement, tout en assurant simultanément un basculement des objets sur eux-mêmes. Un mouvement inverse est assuré par l'autre dispositif de transfert afin de transférer les objets imprimés du poste d'impression au convoyeur d'évacuation.

Un tel dispositif de transfert pour le chargement et/ou le déchargement de l'objet dans un poste d'impression est décrit, par exemple, dans le document FR 2 775 471.

Dans ce document, le dispositif de transfert est adapté pour faire basculer chaque objet sur lui-même tout au long de la trajectoire de déplacement de celui-ci, du convoyeur à l'ensemble de retenue et d'entraînement. Un tel dispositif de transfert comprend une pince de préhension de l'objet, constituée de deux mâchoires articulées présentant une ouverture en rotation d'un angle suffisant pour permettre la préhension de l'objet tout en évitant que la périphérie de la base des objets ne heurte la surface du convoyeur d'amenée des objets, lors de la phase initiale de déplacement de l'objet vers le poste d'impression.

Toutefois, un tel dispositif présente une cadence de transfert des objets faible en raison du temps d'ouverture des mâchoires nécessité par la longueur de la course angulaire effectuée par les mâchoires articulées. Or, ce type de mâchoires est imposé par le faible espace disponible entre convoyeur d'amenée des objets et les objets disposés sur celui-ci pour déplacer l'objet.

Le dispositif décrit dans EP 1 543 965 fait aussi partie de l'état de l'art.

L'invention a pour but de proposer un dispositif de transfert présentant un rendement de transfert plus élevé.

A cet effet, l'invention a pour objet un dispositif de transfert, du type précité, caractérisé en ce que moyens d'entraînement comprennent des moyens de synchronisation propres à inhiber temporairement, en fonction de la position du bras manipulateur, le basculement de la pince de préhension par rapport au bras manipulateur, autour de l'axe de basculement, au cours d'au moins une phase de rotation d'extrémité préalable et/ou subséquente à la phase de rotation intermédiaire.

Suivant des modes particuliers de réalisation, le dispositif de transfert comporte l'une ou plusieurs des caractéristiques suivantes :
- les moyens de synchronisation sont propres à stopper le basculement de la pince de préhension par rapport au bras manipulateur, au cours d'au moins une phase de rotation d'extrémité préalable et/ou subséquente à la phase de rotation intermédiaire ;
- les moyens d'entraînement comprennent :
   - une chaîne d'entraînement du bras manipulateur et de la pince de préhension;
   - une chaîne d'entraînement de la pince de préhension;
   - un unique moteur d'entraînement de la chaîne d'entraînement du bras manipulateur et de la pince de préhension ;
   - un mécanisme commandable de modification de la cinématique de la chaîne d'entraînement de la pince de préhension ; et
   - un moyen de couplage mécanique du moteur d'entraînement au mécanisme commandable de modification pour modifier la cinématique de la pince de préhension ;
- le bras manipulateur comprend une enveloppe, et en ce que les moyens d'entraînement comportent un premier arbre d'entraînement portant un renvoi d'angle, et un second arbre d'entraînement coopérant avec ledit renvoi d'angle, lequel second arbre d'entraînement est fixé solidairement à la pince;
- un unique moteur d'entraînement propre à entraîner d'une part l'enveloppe pour faire pivoter le bras manipulateur autour de l'axe de pivotement et d'autre part le premier arbre d'entraînement pour faire basculer la pince de préhension autour de l'axe de basculement ;
- les moyens d'entraînement sont portés par le bâti de support et en ce que ledit unique moteur d'entraînement est adapté pour entraîner le bras manipulateur et la pince de préhension au cours de la phase de rotation intermédiaire et le bras manipulateur au cours de la ou de chaque phase de rotation d'extrémité ;
- les moyens d'entraînement comportent des premiers moyens de transmission d'un mouvement de pivotement du bras manipulateur par rapport au bâti de support et des deuxièmes moyens de transmission d'un mouvement de basculement de la pince de préhension par rapport au bras manipulateur, les deuxièmes moyens de transmission coopérant avec les moyens de synchronisation ;
- les premiers moyens de transmission comportent un disque d'entraînement solidaire d'un arbre d'entraînement adapté pour entraîner en rotation le disque d'entraînement, un galet de pivotement solidaire du disque d'entraînement, une manivelle solidaire du bras manipulateur et munie d'une rainure de guidage s'étendant radialement par rapport à l'axe de pivotement, la rainure de guidage étant adaptée pour coopérer avec le galet de pivotement pour entraîner en rotation le bras manipulateur, au cours des phases de rotation d'extrémité et dé rotation intermédiaire ;
- les deuxièmes moyens de transmission comprennent un renvoi d'angle disposé dans le bras manipulateur dont une extrémité porte la pince de préhension et dont l'autre extrémité est reliée aux moyens de synchronisation pour entraîner le renvoi d'angle afin d'entraîner en rotation la pince de préhension au cours des phases de rotation d'extrémité et de rotation intermédiaire ;
- les moyens de synchronisation comprennent un chemin de came ménagé sur le disque d'entraînement, le chemin de came comportant au moins une portion d'extrémité présentant une forme adaptée pour entraîner en rotation le renvoi d'angle par rapport au bras manipulateur, et les moyens de synchronisation comprennent un chariot d'entraînement supportant un galet de commande reçu à coulissement dans la ou chaque portion médiane pour entraîner le chariot en translation par rapport au bâti de support et immobiliser en rotation la pince de préhension, par rapport au bras manipulateur au cours de la phase de rotation d'extrémité ;
- le chemin de came comporte au moins une portion médiane présentant une forme adaptée pour entraîner le chariot en translation par rapport au bâti de support et mettre en rotation la pince de préhension, par rapport au bras manipulateur au cours de la phase de rotation intermédiaire ;
- la pince de préhension comprend un élément de support, deux mors montés sur l'élément de support mobiles en translation selon un axe perpendiculaire à l'axe de basculement, et des moyens de déplacement en translation des mâchoires pour enserrer et/ou libérer l'objet ; et
- la pince de préhension comprend en outre au moins deux empreintes présentant chacune un profil spécifique adapté pour coopérer avec la forme particulière d'un objet et comportant des moyens de fixation aux mors.

L'invention a également pour objet une machine d'impression du type comprenant un châssis et un dispositif de transfert tel que mentionné ci-dessus porté par le châssis, caractérisé en ce que le bâti de support est monté mobile par rapport au châssis, et les moyens d'entraînement sont en outre aptes à déplacer le bâti de support par rapport au châssis, selon une direction axiale par rapport à l'axe de pivotement, au cours d'une phase de translation.

Suivant des modes particuliers de réalisation, la machine d'impression comporte l'une ou plusieurs des caractéristiques suivantes :
- elle comprend un dispositif de transfert du type précité, et elle comprend au moins un cylindre de guidage fixé au châssis et muni d'un patin de guidage, et les moyens d'entraînement du dispositif de transfert comportent des troisièmes moyens de transmission du mouvement de translation du bâti de support par rapport au châssis, les troisièmes moyens de transmission comprenant une gorge formée sur la tranche du disque d'entraînement et munie d'au moins un premier tronçon s'étendant axialement par rapport à l'arbre d'entraînement, le patin de guidage étant adapté pour s'engager dans le premier tronçon de la gorge pour déplacer le bâti de support par rapport au châssis selon un mouvement de translation parallèle à l'axe de pivotement, au cours de la phase de translation ; et
- la gorge comporte un second tronçon circulaire et concentrique à l'arbre d'entraînement, et le patin de guidage est adapté pour s'engager dans le second tronçon de la gorge au cours de la phase de rotation d'extrémité et de la phase de rotation intermédiaire pour autoriser le maintien en position du bâti de support et concomitamment le mouvement de rotation du bras manipulateur.

L'invention a également pour objet un procédé de transfert d'un objet entre un premier et un second emplacements dans une machine d'impression telle que mentionnée ci-dessus, comprenant les étapes suivantes :
- au moins une phase de rotation d'extrémité au cours de laquelle le bras manipulateur est entraîné en rotation autour de l'axe de pivotement et la pince de préhension est fixe par rapport à l'axe de basculement ;
- une phase de rotation intermédiaire au cours de laquelle le bras manipulateur est entraîné en rotation autour de l'axe de pivotement et la pince de préhension est entraînée en rotation autour de l'axe de basculement ; et
- une phase de translation au cours de laquelle le bâti de support est rapproché ou éloigné du châssis selon un mouvement de translation parallèlement à l'axe de pivotement, le bras manipulateur est fixe par rapport à l'axe de pivotement et la pince de préhension est fixe par rapport à l'axe de basculement.

Suivant un mode de réalisation particulier, le procédé comprend une phase de déplacement des mors au cours de laquelle les mors sont déplacés selon un mouvement de translation pour enserrer et/ou libérer l'objet et au cours de laquelle le bras manipulateur est fixe par rapport à l'axe de pivotement et la pince de préhension est fixe par rapport à l'axe de basculement.

L'invention sera mieux comprise à la lecture de la description qui va suivre, donnée uniquement à titre d'exemple et faite en se référant aux dessins, sur lesquels :
- la figure 1 est une vue en perspective d'une partie d'une machine d'impression selon l'invention comprenant un dispositif de transfert, également selon l'invention ;

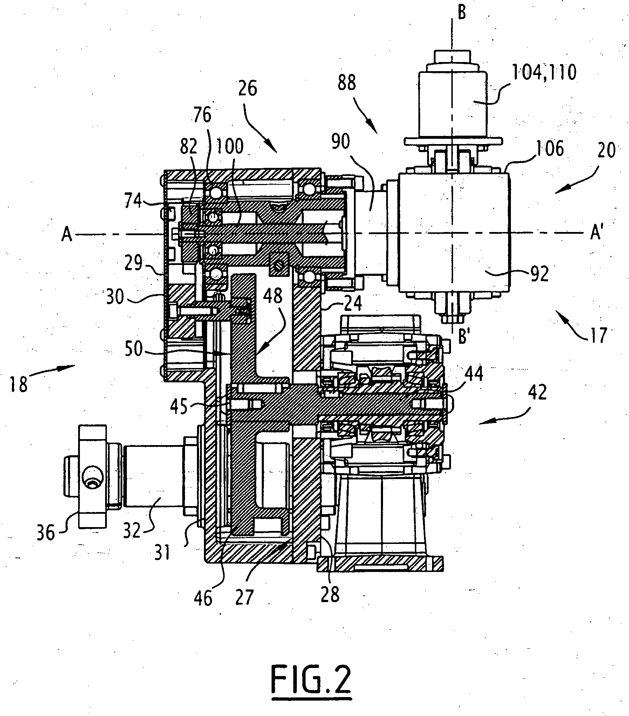

- la figure 2 est une vue en coupe du dispositif de transfert selon le plan II-II de la figure 1 ;
- la figure 3 est une vue en perspective d'une partie des moyens d'entraînement d'un bras manipulateur du dispositif de transfert, illustré sur la figure 1 ;
- la figure 4 est une vue en perspective, en coupe partielle, d'une partie des moyens d'entraînement du bras manipulateur du dispositif de transfert, illustré sur la figure 1 ;
- la figure 5 est une vue en perspective d'un disque d'entraînement du dispositif de transfert, illustré sur la figure 1 ;
- la figure 6 est une vue en perspective d'un chariot d'entraînement du dispositif de transfert, illustré sur la figure 1 ;
- la figure 7 est une vue en perspective du dispositif de transfert, illustré sur la figure 1, dans une position au cours d'une phase de rotation d'extrémité initiale du bras manipulateur sur un convoi d'amenée des objets ;
- la figure 8 est une vue similaire à la vue de la figure 7 dans une position au cours d'une phase de rotation intermédiaire d'une pince de préhension et du bras manipulateur ; et
- la figure 9 est une vue similaire à la vue de la figure 7 dans une position au cours d'une phase de mise en place de l'objet dans un ensemble de retenue et d'entraînement de la machine d'impression.

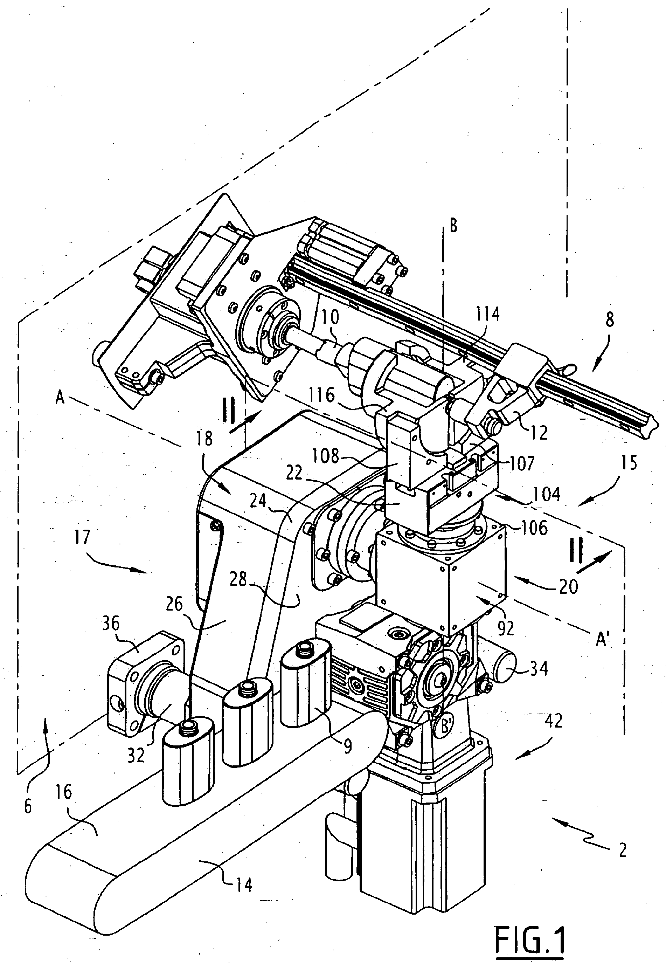

La machine d'impression 2, selon l'invention, comporte un châssis 4 représenté uniquement par une partie de sa face avant 6 sur la figure 1, un ensemble 8 de retenue et d'entraînement en rotation fixé au châssis 4, et un poste d'impression, non représenté, monté sur le châssis 4 au droit de l'ensemble de retenue et d'entraînement 8.

Dans la suite de la description, les orientations "supérieure", "inférieure", "avant" et "arrière" correspondent à l'orientation de la machine d'impression 2.

L'ensemble de retenue et d'entraînement 8 comporte un culot 10 délimitant une empreinte de forme complémentaire à la forme du fond de l'objet à imprimer 9 et une pointe 12 de retenue du goulot de l'objet, disposée en regard du culot 10. Cette pointe 12 est déplaçable à coulissement vers et à l'écart de la face avant 6 du châssis afin d'enserrer axialement l'objet 9 entre le culot et la pointe. Le culot 10 est entraîné axialement en rotation, au cours de l'impression de l'objet. Contrairement à la pointe, le culot 10 est fixe en translation selon une direction perpendiculaire à la face avant 6 du châssis.

La machine d'impression 2 comporte en outre un convoyeur d'amenée 14 des objets à imprimer 9, un dispositif de transfert 15 porté par le châssis 4 est adapté pour déplacer les objets à imprimer 9 du convoyeur d'amenée 14 à l'ensemble de retenue et d'entraînement 8. Elle comporte en outre symétriquement par rapport à un plan vertical médian de la machine d'impression 2 et non représentés sur la figure 1, un convoyeur d'évacuation des objets imprimés et un dispositif de transfert qui assure le déchargement des objets imprimés depuis l'ensemble de retenue et d'entraînement 8 vers le convoyeur d'évacuation.

Le convoyeur d'amenée 14 comporte une bande transporteuse 16 refermée en boucle et maintenue entre deux cylindres parallèles de retournement dont l'un est motorisé. Sur ce convoyeur, les objets à imprimer 9 sont disposés successivement en alignement, avec leur axe de révolution disposé verticalement, perpendiculairement à la bande transporteuse 16.

Sur l'ensemble de retenue et d'entraînement 8, les objets à imprimer 9 sont disposés avec leur axe de révolution disposé horizontalement. Le culot 10 est positionné dans un plan vertical plus proche de la face avant 6 du châssis que le plan vertical contenant le convoyeur 14.

Le dispositif de transfert 15, illustré sur les figues 1 et 2, comporte un équipage mobile 17 monté mobile en translation suivant une direction perpendiculaire à la face avant 6 du châssis.

L'équipage mobile 17 comprend un bâti de support 18 portant un bras manipulateur 20 articulé autour d'un axe de pivotement A-A' perpendiculaire à la face avant 6 du châssis, et équipé à son extrémité, d'une pince de préhension 22 articulée autour d'un axe de basculement B-B' s'étendant perpendiculairement à l'axe A-A'.

L'équipage mobile 17 comprend en outre des moyens d'entraînement 23 de la pince par rapport au châssis 4.

Le bâti de support 18 est formé par une plaque de support 24 qui s'étend dans un plan parallèle à la face avant 6 du châssis, et d'un caisson 26 de protection d'une partie du mécanisme d'entraînement du dispositif de transfert 15.

La plaque de support 24 comporte une face arrière 27 en vis-à-vis de la face avant 6 du châssis et une face avant 28, opposée à la face arrière 27. Le caisson 26 est fixé sur la face arrière 27 de la plaque de support. Une ouverture 29, pratiquée sur la face arrière du caisson 26, permet l'accès aux éléments du mécanisme d'entraînement. Cette ouverture 29 est refermée par un capot 30.

Le bâti de support 18 est monté mobile en translation suivant une direction perpendiculaire à la face avant 6 du châssis. A cet effet, le bâti 18 comporte dans sa partie basse, des paliers 31 traversés par deux cylindres de support 32, 34. Les cylindres de support 32, 34 sont engagés dans les paliers pour porter l'équipage mobile 17 tout en autorisant le coulissement axial de celui-ci le long des cylindres.

Les cylindres de support 32, 34 sont fixés sur la face avant 6 du châssis, par l'intermédiaire de blocs de retenue 36, 38. Les blocs 36, 38 supportent les cylindres 32, 34 de façon à ce que leur axe s'étende perpendiculairement à la face avant 6 du châssis. Un patin de guidage 40 est solidaire de la face périphérique supérieure du cylindre de support 32.

Un groupe moto réducteur 42 est monté dans un carter sur la face avant 28 de la plaque de support. Un arbre d'entraînement 44, issu du groupe moto réducteur 42 traverse un alésage formé dans la partie intermédiaire et centrale de la plaque de support 24. Son extrémité est solidaire du centre 45 d'un disque d'entraînement 46, agencé dans le caisson 26.

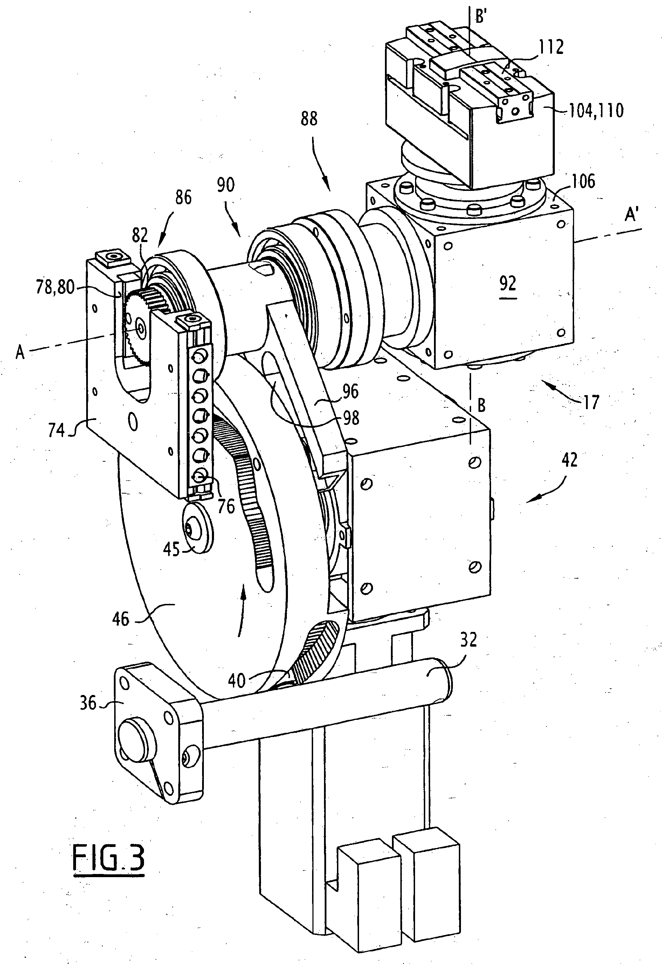

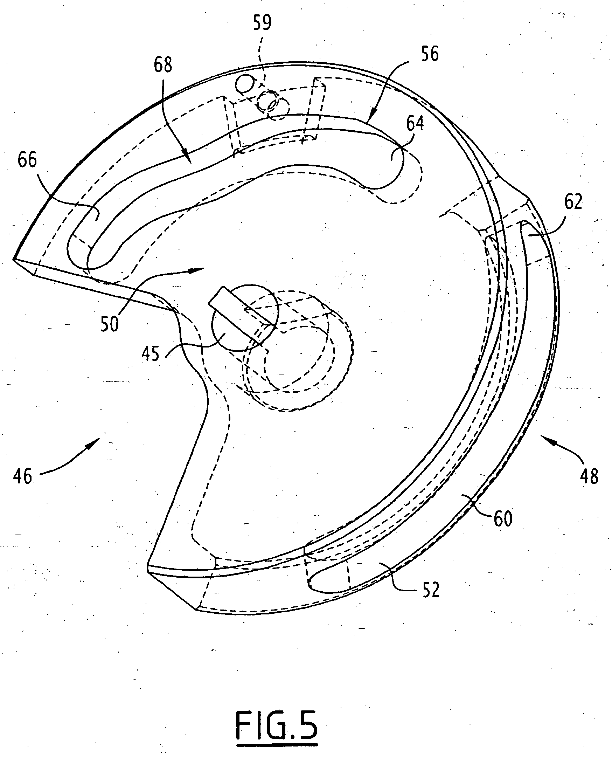

Le disque d'entraînement 46, illustré sur les figures 3, 4 et 5, présente une face avant 48 disposée en regard de la face arrière 27 de la plaque de support et une face arrière 50 opposée à sa face avant 48. Il comprend une gorge 52 formée sur sa tranche 54 et un chemin de came 56 agencé sur sa face arrière 50 en bordure du disque. Un galet rotatif de pivotement 58 est monté sur sa face avant 48 en bordure du disque. L'axe 59 du galet est parallèle à l'axe du disque.

La gorge 52 présente sur sa tranche cylindrique un profil en forme de L. La branche la plus longue 60 s'étend de façon concentrique au centre 45 du disque dans un plan perpendiculaire à l'axe du disque et la branche courte 62 s'infléchit hors de ce plan vers la face avant 48 du disque.

Le patin de guidage 40 solidaire du cylindre de support 32, est engagé dans la gorge 52 pour constituer un point fixe permettant le déplacement de l'équipage mobile 17 par rapport aux cylindres de support 32, 34 sous l'action de la rotation du disque 46.

Le chemin de came 56 comporte deux tronçons d'extrémité 64, 66 opposés ayant une forme non circulaire globalement concentrique au centre 45 du disque mais dont le rayon diverge légèrement, et un tronçon central 68 de forme sensiblement concave de courbure inversée à la courbure des tronçons d'extrémité 64, 66.

La forme des tronçons d'extrémité 64, 66 est telle qu'elle compense le mouvement relatif entre la pince 22 et le bras 20 afin que la pince 22 soit immobile par rapport au bras alors que celui-ci est entraîné en rotation autour de l'axe B-B' pendant une phase de rotation d'extrémité initiale 70 et une phase de rotation d'extrémité finale 71, comme cela sera explicité ultérieurement.

La forme du tronçon central 68 est telle que la pince 22 bascule autours du bras 20 d'un angle de 90 degrés pendant une phase intermédiaire de rotation 72 sur une course du bras s'étendant angulairement le long d'un arc de cercle inférieur à 90 degrés.

Un chariot d'entraînement 74 est monté mobile en translation verticale par rapport au caisson 26 au droit et en partie supérieure de la face arrière 50 du disque. Des rouleaux 76 sont interposés entre les flancs du chariot 74 et les parois latérales du caisson 26 pour autoriser le mouvement de translation du chariot.

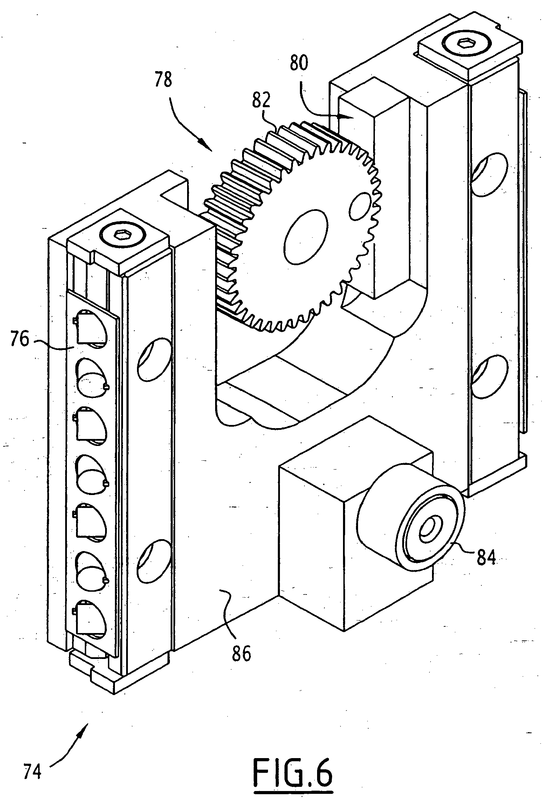

Comme visible sur la figure 6, le chariot 74 présente une forme générale parallélépipédique rectangulaire ayant une ouverture 78 en forme de U à son extrémité supérieure. Un bord intérieur vertical 80 de l'ouverture 78 comporte une crémaillère, non illustrée sur les figures. Un pignon d'entraînement 82 logé dans le caisson 26, est en prise avec cette crémaillère.

Le chariot 74 est muni d'un galet de commande 84 positionné sur sa face avant 86, en partie basse du chariot et en vis-à-vis de la face arrière 50 du disque. Ce galet 84 est reçu dans le chemin de came 56 et coopère avec les flancs de celui-ci.

Le bras manipulateur 20 comprend une enveloppe 88 portant la pince 22. L'enveloppe 88 est constituée par un fourreau d'entraînement 90 porté par la plaque 24 et contenant un renvoi d'angle 92.

Le fourreau 90 est monté sur la plaque 24, libre en rotation autour de son axe, par l'intermédiaire de roulements. L'axe du fourreau 90 s'étend perpendiculairement à la plaque 24 et est confondu à l'axe de pivotement A-A' du bras 20. Une autre extrémité du fourreau 90 est fixée au renvoi d'angle 92.

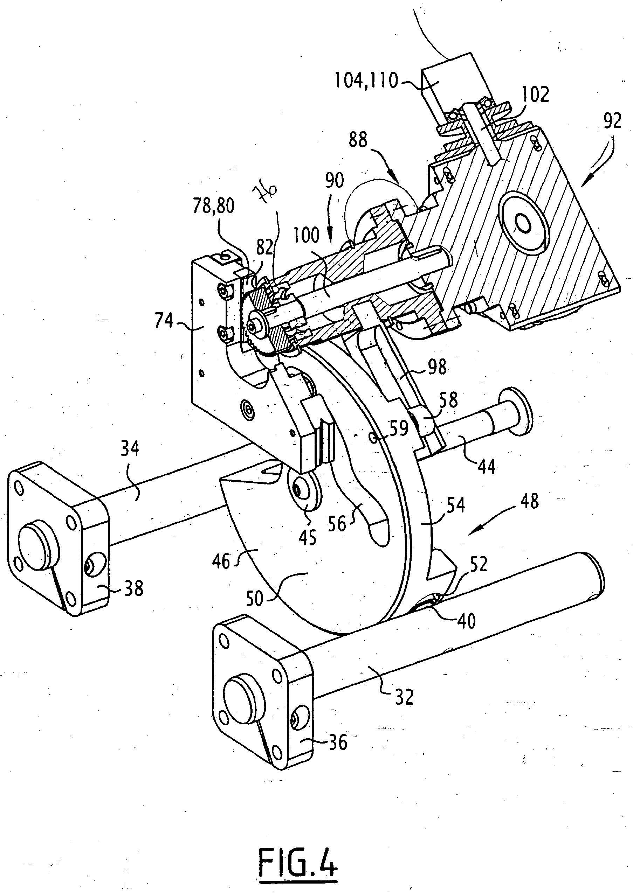

Le fourreau 90, est solidaire d'une manivelle radiale 96, visible sur les figures 3 et 4, dans laquelle une rainure 98 rectiligne est formée. Cette rainure 98 s'étend radialement par rapport à l'axe de pivotement A-A' du fourreau 90. Le galet de pivotement 58 porté par le disque 46, est engagé dans la rainure 98.

Le renvoi d'angle 92 comprend un premier arbre d'entraînement 100 de la pince qui est monté libre en rotation à l'intérieur du fourreau 90. Une extrémité de cet arbre 100 est solidaire du pignon d'entraînement 82. L'autre extrémité de cet arbre 100 porte un pignon conique du renvoi d'angle qui coopère avec un pignon conique complémentaire porté par un second arbre d'entraînement 102 du renvoi d'angle.

La pince 22 comporte un support 104 monté rotatif par l'intermédiaire de roulements, autours de l'axe B-B', sur une surface 106 périphérique extérieure de l'enveloppe 88.

Le support 104 est fixé solidairement au second arbre 102 d'entraînement de la pince. Il porte deux mors 107, 108 disposés en vis-à-vis pour former une mâchoire et un mécanisme d'actionnement 110 des mors 107, 108.

Le mécanisme d'actionnement 110 des mors comporte des glissières rectilignes alignées 112 montées à l'extrémité distale du support 104, perpendiculairement à l'axe B-B' et des vérins d'actionnement pneumatique des deux mors 107, 108. Les vérins d'actionnement sont propres à assurer l'écartement et le rapprochement des deux mors 107, 108 sur les glissières 112, selon un mouvement de translation s'étendant de part et d'autre de l'axe B-B' pour permettre la libération, la préhension et le maintien d'un objet 9 entre eux.

Chaque mors 107, 108 présente sur une de ses faces en regard de l'autre mors, une empreinte 114, 116 ayant un profil correspondant à la forme d'un objet à imprimer 9. Pour chaque dispositif de transfert 15, il est prévu plusieurs empreintes 114, 116 différentes correspondant à différentes formes possibles des objets à imprimer. Ces empreintes 114, 116 sont adaptées pour être fixées aux mors 107, 108.

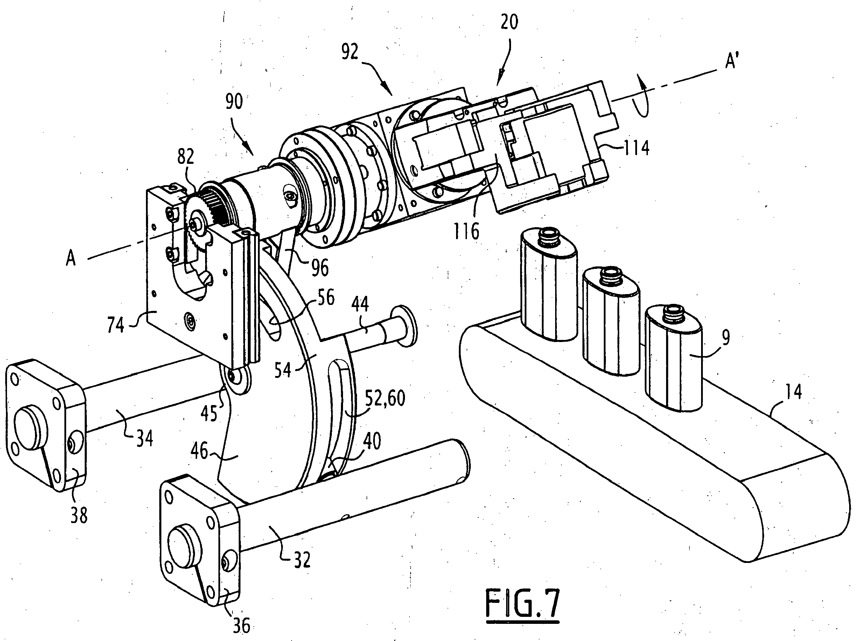

Le fonctionnement du dispositif de transfert 15 va être décrit en liaison avec les figures 7 à 9. Celui-ci prend l'objet à imprimer 9 disposé sur le convoyeur d'amenée 14 et le déplace pour le mettre dans le culot 10 de l'ensemble de retenue et d'entraînement 8.

Initialement, la pince de préhension 22 est disposée au droit du convoyeur d'amenée 14. Les mors 107, 108 entourent l'objet à imprimer 9.

Lors d'une phase 120 de déplacement des mors 107, 108, le mécanisme d'actionnement 110 entraîne les mors 107 et 108 sur les glissières 112 afin que ceux-ci se rapprochent l'un de l'autre et enserrent l'objet 9 situé sur le convoyeur 14. Lors de cette phase, le groupe moto réducteur 42 n'entraîne pas le disque d'entraînement 46. L'équipage mobile 17, le bras 20 et la pince 22 sont fixes.

Lorsque l'objet 9 est maintenu entre les mors 107, 108, le bras manipulateur 20 pivote seulement autour de l'axe de pivotement A-A' au cours d'une phase de rotation d'extrémité initiale 70, illustrée sur la figure 7.

A cet effet, le groupe moto réducteur 42 entraîne en rotation l'arbre d'entraînement 44 qui entraîne le disque d'entraînement 46. Le galet de pivotement 58 situé sur le disque 46, est guidé dans la rainure 98 et entraîne en rotation la manivelle 96 ainsi que l'enveloppe 88 de sorte que le bras 20 et la pince 22 tournent globalement autour de l'axe A-A'.

Parallèlement, au cours de la phase de rotation d'extrémité initiale 70, le galet de commande 84 du chariot 74 est guidé dans le premier tronçon d'extrémité 64.

Comme le tronçon 64 n'est pas rigoureusement circulaire et que sa forme a été calculée afin que la pince 22 soit fixe par rapport au bras 20, le chariot 74 se déplace en translation verticale ascendante lente par rapport au caisson 26 sur une faible course de sorte que le pignon 82 et l'arbre 100 pivotent juste ce qu'il faut pour compenser le mouvement relatif entre la pince 22 et le bras 20.

Précisément, lorsque le chariot 74 se déplace verticalement, la crémaillère 80 engraine le pignon 82 et entraîne celui-ci en rotation. Le mouvement angulaire du pignon 82 est transmis au support 104 de la pince par l'intermédiaire du premier arbre d'entraînement 100, du renvoi d'angle 92 et du second arbre d'entraînement 102.

En conséquence, le bras 20 et la pince 22 pivotent autour de l'axe A-A', et la pince 22 est maintenue dans une position fixe par rapport au bras autour de l'axe B-B'.

De même, au cours de la phase de rotation d'extrémité initiale 70, le patin de guidage 40 est guidé dans la branche 60 de la gorge du disque d'entraînement. Comme la branche 60 est concentrique au centre 45 du disque, l'équipage mobile 17 est et reste fixe par rapport au châssis 4 de la machine d'impression.

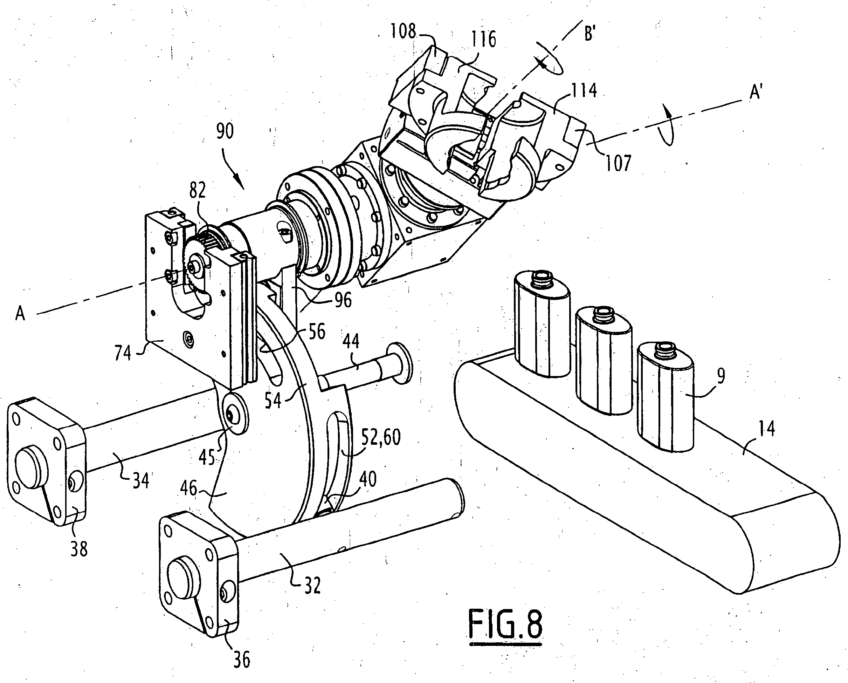

Ensuite, au cours d'une phase de rotation intermédiaire 72, illustrée sur la figure 8, le bras manipulateur 20 continue sa rotation autour de l'axe de pivotement A-A' et seulement alors la pince de préhension 22 est entraînée en rotation autour de l'axe de basculement B-B' simultanément au mouvement de rotation du bras 20.

A cet effet, le groupe moto réducteur 42 continue à entraîner l'arbre d'entraînement 44 et le disque d'entraînement 46.

Le galet de pivotement 58, guidé dans la rainure 98, continue à entraîner la manivelle 96 ainsi que l'enveloppe 88. En conséquence, l'arbre 102 du renvoi d'angle 92 tourne par rapport à l'enveloppe 88 de même que la pince 22 solidaire de l'arbre 102 qui elle aussi tourne par rapport à l'enveloppe 88 globalement d'un angle de 90° autour de son axe de rotation B-B'.

Parallèlement, le chariot 74 est animé d'un mouvement de retour à sa position initiale grâce à la forme du tronçon 98 qui guide le galet 84 dans une position radiale identique à celle qu'il avait au début du cycle.

Les mors 107 et 108 fixés au support 104 et enserrant l'objet font pivoter ce dernier autour de l'axe de basculement B-B' de sorte que l'objet 9 bascule d'un angle de 90° autour de l'axe de basculement B-B', pendant la phase de rotation intermédiaire 72.

Parallèlement également, au cours de la phase de rotation intermédiaire 72, le patin 40 est guidé dans la branche 60 de la gorge 52 de sorte que l'équipage mobile 17 est fixe par rapport au châssis.

La phase de rotation intermédiaire 72 se poursuit par une phase de rotation d'extrémité finale 71 au cours de laquelle la pince de préhension 22 est fixe par rapport à l'axe B-B' grâce à l'action du chariot 74 commandé par le galet 84 coopérant avec le profil 66 du disque d'entraînement 46 et au cours de laquelle le bras manipulateur 20 finit sa rotation autour de l'axe de pivotement A-A' afin d'effectuer un course angulaire totale de 90 degrés.

En conséquence, le bras manipulateur 20 a pivoté d'un angle total de 90° autour de l'axe de pivotement A-A' pendant l'ensemble des phases de rotation intermédiaire 72, de rotation d'extrémité initiale 70 et de rotation d'extrémité finale 71, tandis que la pince 22 a pivoté globalement de 90° autour de son axe B-B' uniquement pendant la phase de rotation intermédiaire 72.

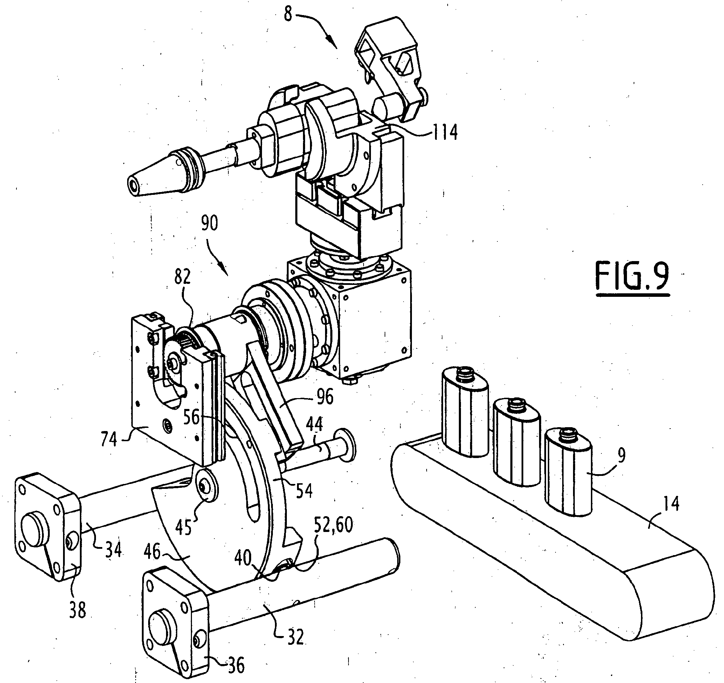

Au cours d'une phase de translation 124, illustrée sur la figure 9, l'équipage mobile 17 est déplacé selon un mouvement de translation parallèle à l'axe A-A' et en direction de la face avant 6 du châssis pour introduire le fond de l'objet 9 dans le culot 10 de l'ensemble de retenue et d'entraînement 8.

A cet effet, le groupe moto réducteur 42 continue à entraîner en rotation le disque 46. Le patin de guidage 40 est guidé dans la branche 62 de sorte que le mouvement de rotation du disque 46 est transformé en un mouvement de translation de l'équipage mobile 17 par rapport au châssis 4, le long du cylindre 32.

A la fin de la phase 71 et au cours de la phase de translation 124, comme le profil 98 de l'extrémité de la manivelle 96 est concentrique sur cette portion à l'axe 45 du disque d'entraînement 46, le bras 20 n'est plus entraîné en rotation.

Lorsque le fond de l'objet 9 a été positionné dans le culot 10, le mécanisme d'actionnement 110 entraîne les mors 107 et 108 afin que ceux-ci s'écartent de l'objet au cours d'une phase de déplacement des mors 130.

Enfin, la pointe 12 coulisse pour retenir l'objet en place et l'ensemble de retenue et d'entraînement 8 est déplacé vers la machine d'impression.

Au cours des phases de rotation d'extrémité initiale 70, de rotation intermédiaire 72, de rotation d'extrémité finale 71 et de translation 124, les mors 107, 108 ne se déplacent pas par rapport au support 104 de la pince.

Pour aller rechercher un autre objet, le dispositif de transfert 15 répète les phases de déplacement décrites ci-dessous en sens inverse, à savoir l'équipage mobile 17 est tout d'abord déplacé en translation pour s'éloigner du châssis 4 au cours de la phase de translation 124.

Puis, le bras manipulateur 20 pivote autour de l'axe A-A' au cours de la phase de rotation d'extrémité finale 71, pendant laquelle la pince 22 ne tourne pas autour de son axe de rotation B-B'.

Puis, la pince 22 pivote autour de l'axe B-B' simultanément à la rotation du bras 20 autour de l'axe A-A', au cours de la phase de rotation intermédiaire 72.

Enfin, aux abords du convoyeur d'amenée 14 et pour ne pas faire tomber un objet 9 disposé sur ce convoyeur, la pince 22 cesse de pivoter autour de l'axe B-B' et le bras 20 finit sa rotation autour de l'axe A-A', au cours de la phase de rotation d'extrémité initiale 71.

Enfin, les mors s'écartent au cours d'une phase 130 pour aller chercher un autre objet 9 disposé sur le convoyeur 14.

En conséquence, le groupe moto réducteur 42 et l'arbre d'entraînement 44 entraînent d'une part, l'équipage mobile 17 en translation, et d'autre part, le bras 20 et la pince 22 en rotation pour l'ensemble du mouvement de la préhension de l'objet 9 sur le convoi d'amenée 14 jusqu'au positionnement de l'objet 9 à l'intérieur du culot 10 de l'ensemble d'entraînement et de retenue.

Les moyens de synchronisation du mouvement du bras manipulateur 20 et de la pince 22 inhibent le basculement de la pince 22 par rapport au bras au cours des phases de rotation d'extrémité 70, 71, c'est-à-dire lorsque le bras 20 est à proximité de l'ensemble de retenue et d'entraînement 8 et lorsque le bras 20 est à proximité du convoyeur d'amenée 14 afin d'empêcher que la pince 22 ou l'objet porté par celle-ci ne heurte le dispositif de retenue et d'entraînement 8 avant la mise en place de l'objet dans celui-ci et lorsque la pince s'éloigne de celui-ci pour rechercher un autre objet.

Selon un mode de réalisation particulier, les moyens de synchronisation stoppent complètement le basculement de la pince 22 par rapport au bras 20 au cours des phases de rotation d'extrémité 70, 71.

Le galet de pivotement 58, l'enveloppe 88, la manivelle 96 et la rainure 98 de la manivelle constituent une chaîne d'entraînement du bras manipulateur 20 et de la pince de préhension 22. Le pignon d'entraînement 82 et l'arbre d'entraînement 100 constituent une chaîne d'entraînement de la pince de préhension 22. Le chariot d'entraînement 74, le chemin de came 56 et le galet de commande 84 constituent un mécanisme commandable de modification de la cinématique de la chaîne d'entraînement de la pince de préhension 22. Le disque d'entraînement 50 constitue un moyen de couplage mécanique entre le moteur 42 et le mécanisme commandable de modification de la cinématique de la chaîne d'entraînement de la pince de préhension 22.

Le même moteur d'entraînement 42 est propre à entraîner le bras manipulateur 20 et la pince 22. Toutefois, le déplacement du bras s'étend sur une plage angulaire différente de la plage angulaire de la pince 22 et la vitesse de rotation du bras est différente de la vitesse de rotation de la pince 22. A cet effet, un mécanisme de modification de la cinématique (c'est-à-dire de la vitesse) de la pince et un moyen de couplage mécanique sont introduits entre la pince 22 et le moteur 42.

Le mécanisme de modification de la cinématique est commandé à partir de la vitesse du moteur 42.

Le chemin de came 56, le chariot 74 et le galet de commande 84 constituent des moyens de synchronisation des mouvements du bras 20 et de la pince 22.

Avantageusement, ce dispositif de transfert est propre à déplacer les objets à une cadence élevée tout en évitant que les objets ne heurtent la surface du convoyeur d'amenée ou la surface de l'ensemble de retenue et d'entraînement et en évitant que les mors ne heurtent l'objet lors des phases de recherche de celui-ci.

De plus, une pince comprenant des mors guidés en translation est plus facile à réaliser qu'une pince comprenant des mors articulés.

De plus, l'utilisation d'une telle pince, nécessite une course de déplacement des mors s'étendant au minimum à quelques millimètres de plus que la largeur de l'objet à déplacer.

En outre, la rotation de 90 degrés de la pince de préhension se fait en dehors de la zone de rapprochement avec le convoyeur d'amenée et en dehors de la zone d'approche ou de retrait de la position entre le culot et la pointe de l'objet placé entre ces derniers.

## Revendications

1. Machine d'impression (2),comprenant un châssis (4), un dispositif de transfert (15) d'un objet (9), le dispositif de transfert (15) étant porté par le châssis (4) et un ensemble de retenue et d'entraînement (8) comprenant un culot (10), propre à recevoir le fond de l'objet (19), le dispositif de transfert (15) comprenant :
- un bâti de support (18) ;
- un bras manipulateur (20) porté par le bâti de support (18) et articulé par rapport au bâti de support (18), autour d'un axe de pivotement (A-A') ;
- une pince de préhension (22) de l'objet (9) portée par le bras manipulateur (20) et articulée par rapport au bras manipulateur (20), autour d'un axe de basculement (B-B') décalé angulairement par rapport à l'axe de pivotement (A-A') ; et
- des moyens d'entraînement (23) adaptés pour entraîner en rotation concomitamment le bras manipulateur (20) et la pince de préhension (22) au cours d'une phase de rotation intermédiaire (72) ;
**caractérisée en ce que** les moyens d'entraînement (23) comprennent des moyens de synchronisation (56, 74, 84) propres à inhiber temporairement, en fonction de la position du bras manipulateur (20), le basculement de la pince de préhension (22) par rapport au bras manipulateur (20), autour de l'axe de basculement (B-B'), au cours d'au moins une phase de rotation d'extrémité (70, 71) préalable et/ou subséquente à la phase de rotation intermédiaire (72) et **en ce que** le bâti de support (18) est monté mobile par rapport au châssis (4), et les moyens d'entraînement (23) sont en outre aptes à déplacer le bâti de support (18) par rapport au châssis (4), selon une direction parallèle à l'axe de pivotement (A-A'), au cours d'une phase de translation (124), de manière à introduire le fond de l'objet (9) dans le culot (10).

2. Machine d'impression (2) selon la revendication 1, **caractérisée en ce que** les moyens de synchronisation (56, 74, 84) sont propres à stopper le basculement de la pince de préhension (22) par rapport au bras manipulateur (20), au cours d'au moins une phase de rotation d'extrémité (70, 71) préalable et/ou subséquente à la phase de rotation intermédiaire (72).

3. Machine d'impression (2) selon l'une quelconque des revendications 1 et 2, **caractérisée en ce que** les moyens d'entraînement (23) comprennent :
- une chaîne (58, 88, 96, 98) d'entraînement du bras manipulateur (20) et de la pince de préhension (22) ;
- une chaîne d'entraînement (82, 100) de la pince de préhension (22) ;
- un unique moteur (42) d'entraînement de la chaîne d'entraînement (58, 88, 96, 98) du bras manipulateur (20) et de la pince de préhension (22) ;
- un mécanisme commandable (56, 74, 84) de modification de la cinématique de la chaîne d'entraînement (82, 100) de la pince de préhension (22) ; et
- un moyen (50) de couplage mécanique du moteur d'entraînement (42) au mécanisme (56, 74, 84) commandable de modification pour modifier la cinématique de la pince de préhension (22).

4. Machine d'impression (2) selon l'une quelconque des revendications 1 à 3, **caractérisée en ce que** le bras manipulateur (20) comprend une enveloppe (88), et **en ce que** les moyens d'entraînement comportent un premier arbre d'entraînement (100) portant un renvoi d'angle (92), et un second arbre d'entraînement (102) coopérant avec ledit renvoi d'angle (92), lequel second arbre d'entraînement (102) est fixé solidairement à la pince (22) ;
- un unique moteur d'entraînement (42) propre à entraîner d'une part l'enveloppe (88) pour faire pivoter le bras manipulateur (20) autour de l'axe de pivotement (A-A') et d'autre part le premier arbre d'entraînement (100) pour faire basculer la pince de préhension (22) autour de l'axe de basculement (B-B').

5. Machine d'impression (2) selon l'une quelconque des revendications 1 à 4, **caractérisée en ce que** les moyens d'entraînement (23) sont portés par le bâti de support (18), et **en ce que** ledit unique moteur d'entraînement (42) est adapté pour entraîner le bras manipulateur (20) et la pince de préhension (22) au cours de la phase de rotation intermédiaire (72) et seulement le bras manipulateur (20) au cours de la ou de chaque phase de rotation d'extrémité (70, 71).

6. Machine d'impression (2) selon l'une quelconque des revendications 1 à 5, **caractérisée en ce que** les moyens d'entraînement (23) comportent des premiers moyens de transmission (46, 58, 96, 98) d'un mouvement de pivotement du bras manipulateur (20) par rapport au bâti de support (18) et des deuxièmes moyens de transmission (92) d'un mouvement de basculement de la pince de préhension (22) par rapport au bras manipulateur (20), les deuxièmes moyens de transmission (92) coopérant avec les moyens de synchronisation (56, 74, 84).

7. Machine d'impression (2) selon la revendication 6, **caractérisée en ce que** les premiers moyens de transmission (46, 58, 96, 98) comportent un disque d'entraînement (46) solidaire d'un arbre (44) d'entraînement adapté pour entraîner en rotation le disque d'entraînement (46), un galet de pivotement (58) solidaire du disque d'entraînement (46), une manivelle (96) solidaire du bras manipulateur (20) et munie d'une rainure de guidage (96) s'étendant radialement par rapport à l'axe de pivotement (A-A'), la rainure de guidage (98) étant adaptée pour coopérer avec le galet de pivotement (58) pour entraîner en rotation le bras manipulateur (20), au cours des phases de rotation d'extrémité (70, 71) et de rotation intermédiaire (72).

8. Machine d'impression (2) selon la revendication 7, **caractérisée en ce que** les deuxièmes moyens de transmission (92) comprennent un renvoi d'angle (92) disposé dans le bras manipulateur (20) dont une extrémité porte la pince de préhension (22) et dont l'autre extrémité est reliée aux moyens de synchronisation (56, 74, 84) pour entraîner le renvoi d'angle (92) afin d'entraîner en rotation la pince de préhension (22) au cours des phases de rotation d'extrémité (70, 71) et de rotation intermédiaire (72).

9. Machine d'impression (2) selon la revendication 8, **caractérisée en ce que** les moyens de synchronisation (56, 74, 84) comprennent un chemin de came (56) ménagé sur le disque d'entraînement (46), le chemin de came (56) comportant au moins une portion d'extrémité (64,66) présentant une forme adaptée pour entraîner en rotation le renvoi d'angle (92) par rapport au bras manipulateur (20), et **en ce que** les moyens de synchronisation (56, 74, 84) comprennent un chariot d'entraînement (74) supportant un galet de commande (84) reçu à coulissement dans la ou chaque portion médiane (68) pour entraîner le chariot (74) en translation par rapport au bâti de support (18) et immobiliser en rotation la pince de préhension (22), par rapport au bras manipulateur (20) au cours de la phase de rotation d'extrémité (70, 71).

10. Machine d'impression (2) selon la revendication 7, **caractérisée en ce que** le chemin de came (56) comporte au moins une portion médiane (68) présentant une forme adaptée pour entraîner le chariot (74) en translation par rapport au bâti de support (18) et mettre en rotation la pince de préhension (22), par rapport au bras manipulateur (20) au cours de la phase de rotation intermédiaire (72).

11. Machine d'impression (2) selon l'une quelconque des revendications précédentes, **caractérisée en ce que** la pince de préhension (22) comprend :
- un élément de support (104) ;
- deux mors (107,108) montés sur l'élément de support (104) mobiles en translation selon un axe perpendiculaire à l'axe de basculement (B-B') ; et
- des moyens de déplacement (110, 112) en translation des mâchoires (107,108) pour enserrer et/ou libérer l'objet (9).

12. Machine d'impression (2) selon la revendication 11, **caractérisée en ce que** la pince de préhension (22) comprend en outre au moins deux empreintes (114, 116) présentant chacune un profil spécifique adapté pour coopérer avec la forme particulière d'un objet (9) et comportant des moyens de fixation aux mors (107, 108).

13. Machine d'impression (2) selon la revendication 4, **caractérisée en ce que** la machine d'impression (2) comprend au moins un cylindre de guidage (32) fixé au châssis (4) et muni d'un patin de guidage (40), et **en ce que** les moyens d'entraînement (23) du dispositif de transfert (15) comportent des troisièmes moyens (52) de transmission du mouvement de translation du bâti de support (18) par rapport au châssis (4), les troisièmes moyens de transmission (52) comprenant une gorge (52) formée sur la tranche (54) du disque d'entraînement (46) et munie d'au moins un premier tronçon (62) s'étendant axialement par rapport à l'arbre d'entraînement (44), le patin de guidage (40) étant adapté pour s'engager dans le premier tronçon (62) de la gorge (52) pour déplacer le bâti de support (18) par rapport au châssis (4) selon un mouvement de translation parallèle à l'axe de pivotement (A-A'), au cours de la phase de translation (124).

14. Machine d'impression (2) selon la revendication 13, **caractérisée en ce que** la gorge (52) comporte un second tronçon (60) circulaire et concentrique à l'arbre d'entraînement (44), et **en ce que** le patin de guidage (40) est adapté pour s'engager dans le second tronçon (60) de la gorge (52) au cours de la phase de rotation d'extrémité (70, 71) et de la phase de rotation intermédiaire (72) pour autoriser le maintien en position du bâti de support (18) et concomitamment le mouvement de rotation du bras manipulateur (20).

15. Procédé de transfert d'un objet (9) entre un premier et un second emplacements dans une machine d'impression (2) selon l'une quelconque des revendications 1 à 14, **caractérisé en ce qu'**il comprend les étapes suivantes :
- au moins une phase de rotation d'extrémité (70, 71) au cours de laquelle le bras manipulateur (20) est entraîné en rotation autour de l'axe de pivotement (A-A') et la pince de préhension (22) est fixe par rapport à l'axe de basculement (B-B') ;
- une phase de rotation intermédiaire (72) au cours de laquelle le bras manipulateur (20) est entraîné en rotation autour de l'axe de pivotement (A-A') et la pince de préhension (22) est entraînée en rotation autour de l'axe de basculement (B-B') ; et
- une phase de translation (124) au cours de laquelle le bâti de support (18) est rapproché ou éloigné du châssis (4) selon un mouvement de translation parallèlement à l'axe de pivotement (A-A'), le bras manipulateur (20) est fixe par rapport à l'axe de pivotement (A-A') et la pince de préhension (22) est fixe par rapport à l'axe de basculement (B-B').

16. Procédé selon la revendication 15 comprenant une machine d'impression (2) du type selon la revendication 8, **caractérisé en ce qu'**il comprend une phase de déplacement des mors (120, 130) au cours de laquelle les mors (107, 108) sont déplacés selon un mouvement de translation pour enserrer et/ou libérer l'objet (9) et au cours de laquelle le bras manipulateur (20) est fixe par rapport à l'axe de pivotement (A-A') et la pince de préhension (22) est fixe par rapport à l'axe de basculement (B-B').

## Patentansprüche

1. Druckmaschine (2) mit einem Gestell (4), einer Übertragungsvorrichtung (15) für einen Gegenstand (9), wobei die Übertragungsvorrichtung (15) vom Gestell (4) und einer Halte- und Antriebseinheit (8) getragen ist, mit einem Sockel (10), der sich dazu eignet, den Boden des Gegenstands (19) aufzunehmen, wobei die Übertragungsvorrichtung (15) aufweist:
- ein Stützgehäuse (18);
- einen Handhabungsarm (20), der vom Stützgehäuse (18) getragen und in Bezug auf das Stützgehäuse (18) um eine Schwenkachse (A-A') angelenkt ist;
- eine Greiferzange (22) für den Gegenstand (9), die vom Handhabungsarm (20) getragen und in Bezug auf den Handhabungsarm (20) um eine Kippachse (B-B') angelenkt ist, die in Bezug auf die Schwenkachse (A-A') winkelversetzt ist, und
- Antriebseinrichtungen (23), die dazu angepasst sind, den Handhabungsarm (20) und die Greiferzange (22) während einer Zwischendrehphase (72) gleichzeitig drehend anzutreiben;
**dadurch gekennzeichnet, dass** die Antriebseinrichtungen (23) Synchronisierungseinrichtungen (56, 74, 84) aufweisen, die sich dazu eignen, temporär in Abhängigkeit von der Position des Handhabungsarms (20) die Kippbewegung der Greiferzange (22) in Bezug auf den Handhabungsarm (20) um die Kippachse (B-B') während zumindest einer Enddrehphase (70, 71) vor der und/oder anschließend an die Zwischendrehphase (72) zu hemmen, und dass das Stützgehäuse (18) in Bezug auf das Gestell (4) beweglich angebracht ist, und die Antriebseinrichtungen (23) darüber hinaus dazu geeignet sind, das Stützgehäuse (18) in Bezug auf das Gestell (4) während einer Translationsphase (124) in einer zur Schwenkachse (A-A') parallelen Richtung zu bewegen, um den Boden des Gegenstands (9) in den Sockel (10) einzuführen.

2. Druckmaschine (2) nach Anspruch 1, **dadurch gekennzeichnet, dass** die Synchronisierungseinrichtungen (56, 74, 84) dazu geeignet sind, die Kippbewegung der Greiferzange (22) in Bezug auf den Handhabungsarm (20) während zumindest einer Enddrehphase (70, 71) vor der und/oder anschließend an die Zwischendrehphase (72) zu stoppen.

3. Druckmaschine (2) nach einem der Ansprüche 1 und 2, **dadurch gekennzeichnet, dass** die Antriebseinrichtungen (23) aufweisen:
- eine Kette (58, 88, 96, 98) zum Antrieb des Handhabungsarms (20) und der Greiferzange (22);
- eine Antriebskette (82, 100) für die Greiferzange (22);
- einen einzigen Motor (42) zum Antrieb der Antriebskette (58, 88, 96, 98) des Handhabungsarms (20) und der Greiferzange (22);
- einen steuerbaren Mechanismus (56, 74, 84) zum Modifizieren der Kinematik der Antriebskette (82, 100) der Greiferzange (22); und
- eine Einrichtung (50) zur mechanischen Kopplung des Antriebsmotors (42) mit dem steuerbaren Modifizierungsmechanismus (56, 74, 84), um die Kinematik der Greiferzange (22) zu modifizieren.

4. Druckmaschine (2) nach einem der Ansprüche 1 bis 3, **dadurch gekennzeichnet, dass** der Handhabungsarm (20) eine Umhüllung (88) aufweist, und dass die Antriebseinrichtungen eine erste Antriebswelle (100), die ein erstes Winkelgetriebe (92) trägt, und eine zweite Antriebswelle (102) aufweist, die mit dem Winkelgetriebe (92) zusammenwirkt, welche zweite Antriebswelle (102) fest an der Zange (22) fixiert ist;
- einen einzigen Antriebsmotor (42), der sich dazu eignet, einerseits die Umhüllung (88) anzutreiben, um den Handhabungsarm (20) sich um die Schwenkachse (A-A') verschwenken zu lassen, und andererseits die erste Antriebswelle (100) anzutreiben, um die Greiferzange (22) um die Kippachse (B-B') kippen zu lassen.

5. Druckmaschine (2) nach einem der Ansprüche 1 bis 4, **dadurch gekennzeichnet, dass** die Antriebseinrichtungen (23) vom Stützgehäuse (18) getragen sind, und dass der einzige Antriebsmotor (42) dazu angepasst ist, den Handhabungsarm (20) und die Greiferzange (22) während der Zwischendrehphase (72) und nur den Handhabungsarm (20) während der oder jeder Enddrehphase (70, 71) anzutreiben.

6. Druckmaschine (2) nach einem der Ansprüche 1 bis 5, **dadurch gekennzeichnet, dass** die Antriebseinrichtungen (23) erste Übertragungseinrichtungen (46, 58, 96, 98) für eine Schwenkbewegung des Handhabungsarms (20) in Bezug auf das Stützgehäuse (18) und zweite Übertragungseinrichtungen (92) für eine Kippbewegung der Greiferzange (22) in Bezug auf den Handhabungsarm (20) haben, wobei die zweiten Übertragungseinrichtungen (92) mit den Synchronisierungseinrichtungen (56, 74, 84) zusammenwirken.

7. Druckmaschine (2) nach Anspruch 6, **dadurch gekennzeichnet, dass** die ersten Übertragungseinrichtungen (46, 58, 96, 98) eine Abtriebsscheibe (46), die fest mit einer Antriebswelle (44) verbunden ist, die dazu angepasst ist, die Antriebsscheibe (46) drehend anzutreiben, eine Schwenkrolle (58), die fest mit der Antriebswelle (46) verbunden ist, und eine Kurbel (96) aufweisen, die fest mit dem Handhabungsarm (20) verbunden und mit einer Führungsnut (98) versehen ist, die sich in Bezug auf die Schwenkachse (A-A') radial erstreckt, wobei die Führungsnut (98) dazu angepasst ist, während der Enddrehphasen (70, 71) und der Zwischendrehphase (72) mit der Schwenkrolle (58) zusammenzuwirken, um den Handhabungsarm (20) anzutreiben.

8. Druckmaschine (2) nach Anspruch 7, **dadurch gekennzeichnet, dass** die zweiten Übertragungseinrichtungen (92) ein Winkelgetriebe (92) aufweisen, das im Handhabungsarm (20) angeordnet ist, von dem ein Ende die Greiferzange (22) trägt, und von dem das andere Ende an die Synchronisierungseinrichtungen (56, 74, 84) zum Antrieb des Winkelgetriebes (92) angeschlossen ist, um die Greiferzange (22) während der Enddrehphasen (70, 71) und der Zwischendrehphase (72) drehend anzutreiben.

9. Druckmaschine (2) nach Anspruch 8, **dadurch gekennzeichnet, dass** die Synchronisierungseinrichtungen (56, 74, 84) eine Nockenbahn (56) aufweisen, die auf der Antriebsscheibe (46) ausgebildet ist, wobei die Nockenbahn (56) mindestens einen Endabschnitt (64, 66) aufweist, der eine Form darstellt, die dazu angepasst ist, das Winkelgetriebe (92) in Bezug auf den Handhabungsarm (20) drehend anzutreiben, und dass die Synchronisierungseinrichtungen (56, 74, 84) einen Antriebsschlitten (74) aufweisen, der eine Steuerrolle (84) lagert, die gleitbeweglich in dem oder jedem mittleren Abschnitt (68) aufgenommen ist, um während der Enddrehphase (70, 71) den Schlitten (74) in Bezug auf das Stützgehäuse (18) translatorisch anzutreiben und die Greiferzange (22) in Bezug auf den Handhabungsarm (20) in der Drehung zu blockieren.

10. Druckmaschine (2) nach Anspruch 7, **dadurch gekennzeichnet, dass** die Nockenbahn (56) mindestens einen mittleren Abschnitt (68) hat, der eine Form aufweist, die dazu angepasst ist, während der Zwischendrehphase (72) den Schlitten (74) in Bezug auf das Stützgehäuse (18) translatorisch anzutreiben und die Greiferzange (22) in Bezug auf den Handhabungsarm (20) in Drehung zu versetzen.

11. Druckmaschine (2) nach einem der vorhergehenden Ansprüche, **dadurch gekennzeichnet, dass** die Greiferzange (22) aufweist:
- ein Stützelement (104);
- zwei am Stützelement (104) montierte Spannbacken (107, 108), die entlang einer zur Kippachse (B-B') senkrechten Achse translatorisch beweglich sind; und
- Translationsverschiebungseinrichtungen (110, 112) der Spannbacken (107, 108) zum Festklemmen und/oder Freisetzen des Gegenstands (9).

12. Druckmaschine (2) nach Anspruch 11, **dadurch gekennzeichnet, dass** die Greiferzange (22) darüber hinaus mindestens zwei Prägungen (114, 116) hat, wovon jede ein spezifisches Profil aufweist, das dazu angepasst ist, mit der speziellen Form eines Gegenstands (9) zusammenzuwirken, und Einrichtungen zur Befestigung an den Spannbacken (107, 108) hat.

13. Druckmaschine (2) nach Anspruch 4, **dadurch gekennzeichnet, dass** die Druckmaschine (2) mindestens einen Führungszylinder (32) hat, der am Gestell (4) befestigt und mit einem Führungsgleitschuh (40) versehen ist, und dass die Antriebseinrichtungen (23) der Übertragungsvorrichtung (15) dritte Einrichtungen (52) zur Übertragung der Translationsbewegung des Stützgehäuses (18) in Bezug auf das Gestell (4) haben, wobei die dritten Übertragungseinrichtungen (52) eine Auskehlung (52) haben, die auf dem Teilabschnitt (54) der Antriebsscheibe (46) ausgebildet und mit mindestens einem ersten Abschnitt (62) versehen ist, der sich in Bezug auf die Antriebswelle (44) axial erstreckt, wobei der Führungsgleitschuh (40) dazu angepasst ist, während der Translationsphase (124) in den ersten Abschnitt (62) der Auskehlung (52) einzugreifen, um das Stützgehäuse (18) in Bezug auf das Gestell (4) entsprechend einer zur Schwenkachse (A-A') parallelen Translationsbewegung zu verschieben.

14. Druckmaschine (2) nach Anspruch 13, **dadurch gekennzeichnet, dass** die Auskehlung (52) einen kreisförmigen und zur Antriebswelle (44) konzentrischen zweiten Abschnitt (60) hat, und dass der Führungsgleitschuh (40) dazu angepasst ist, während der Enddrehphase (70, 71) und der Zwischendrehphase (72) in den zweiten Abschnitt (60) der Auskehlung (52) einzugreifen, um die Positionsaufrechterhaltung des Stützgehäuses (18) und gleichzeitig die Drehbewegung des Handhabungsarms (20) zuzulassen.

15. Verfahren zum Übertragen eines Gegenstands (9) zwischen einer ersten und zweiten Stelle in einer Druckmaschine (2) nach einem der Ansprüche 1 bis 14, **dadurch gekennzeichnet, dass** es die folgenden Schritte umfasst:
- mindestens eine Enddrehphase (70, 71), während welcher der Handhabungsarm (20) drehend um die Schwenkachse (A-A') angetrieben wird und die Greiferzange (22) in Bezug auf die Kippachse (B-B') feststehend ist;
- eine Zwischendrehphase (72), während welcher der Handhabungsarm (20) drehend um die Schwenkachse (A-A') angetrieben wird und die Greiferzange (22) drehend um die Kippachse (B-B') angetrieben wird; und
- eine Translationsphase (124), während welcher das Stützgehäuse (18) entsprechend einer zur Schwenkachse (A-A') parallelen Translationsbewegung dem Gestell (4) angenähert oder von diesem entfernt wird, der Handhabungsarm (20) in Bezug auf die Schwenkachse (A-A') feststeht und die Greiferzange (22) in Bezug auf die Kippachse (B-B') feststeht.

16. Verfahren nach Anspruch 15, eine Druckmaschine (2) des Typs gemäß Anspruch 8 umfassend, **dadurch gekennzeichnet, dass** es eine Verschiebungsphase (120, 130) für die Spannbacken umfasst, während welcher die Spannbacken (107, 108) entsprechend einer Translationsbewegung zum Festklemmen und/oder Freisetzen des Gegenstands (9) verschoben werden, und während welcher der Handhabungsarm (20) in Bezug auf die Schwenkachse (A-A') feststeht und die Greiferzange (22) in Bezug auf die Kippachse (B-B') feststeht.

## Claims

1. A printing machine (2) comprising a frame (4) and a transfer device (15) for transferring an article (9, the transfer device (15) being carried by the frame (4) and a retention and drive assembly (8) comprising a socket (10) able to receive the bottom of the article (9), the transfer device (15) comprising:
· a support structure (18);
· a manipulator arm (20) carried by the support structure (18) and hinged relative to the support structure (18), about a pivot axis (A-A');
· a clamp (22) for gripping the article (9) carried by the manipulator arm (20) and hinged relative to the manipulator arm (20) about a tilt axis (B-B') that is angularly offset relative to the pivot axis (A-A'); and
· drive means (23) adapted to drive both the manipulator arm (20) and the gripper clamp (22) in rotation during an intermediate rotation stage (72);
**characterized in that** the drive means (23) comprise synchronization means (56, 74, 84) suitable for inhibiting tilting of the gripper clamp (22) relative to the manipulator arm (20) about the tilt axis (B-B'), temporarily as a function of the position of the manipulator arm (20) during at least one terminal rotation stage (70, 71) before and/or after the intermediate rotation stage (72), and **in that** the support structure (18) is mounted to move relative to the frame (4), and the drive means (23) are also adapted to move the support structure (18) relative to the frame (4) in a direction parallel to the pivot axis (A-A') during a stage (124) of movement in translation, so as to introduce the bottom of the article (9) in the socket (10).

2. The printing machine (2) according to claim 1, **characterized in that** the synchronization means (56, 74, 84) are suitable for stopping the gripper clamp (22) from tilting relative to the manipulator arm (20) during at least one terminal rotation stage (70, 71) before and/or after the intermediate rotation stage (72).

3. The printing machine (2) according to any of claims 1 and 2, **characterized in that** the drive means (23) comprise:
· a drive system (58, 88, 96, 98) for driving the manipulator arm (20) and the gripper clamp (22);
· a drive system (82, 100) for driving the gripper clamp (22);
· a single drive motor (42) for driving the drive system (58, 88, 96, 98) for the manipulator arm (20) and the gripper clamp (22);
· a controllable mechanism (56, 74, 84) for modifying the kinematics of the drive system (82, 100) for the gripper clamp (22); and
· means (50) for mechanically coupling the drive motor (42) to the controllable mechanism (56, 74, 84) for modifying the kinematics of the gripper clamp (22).

4. The printing machine (2) according to any one of claims 1 to 3, **characterized in that** the manipulator arm (20) includes a shell (88), and **in that** the drive means include a first drive shaft (100) carrying an angle transmission (92), and a second drive shaft (102) co-operating with said angle transmission (92), which second drive shaft (102) is fastened securely to the clamp (22);
· a single drive motor (42) suitable for driving both the shell (88) to cause the manipulator arm (20) to pivot about the pivot axis (A-A'), and the first drive shaft (100) to cause the gripper clamp (22) to tilt about the tilt axis (B-B').

5. The printing machine (2) according to any one of claims 1 to 4, **characterized in that** the drive means (23) are carried by the support structure (18), and **in that** said single drive motor (42) is adapted to drive the manipulator arm (20) and the gripper clamp (22) during the intermediate rotation stage (72), and to drive only the manipulator arm (20) during the or each terminal rotation stage (70, 71).

6. The printing machine (2) according to any one of claims 1 to 5, **characterized in that** the drive means (23) comprise first transmission means (46, 58, 96, 98) for transmitting pivoting movement of the manipulator arm (20) relative to the support structure (18), and second transmission means (92) for transmitting tilting movement of the gripper clamp (22) relative to the manipulator arm (20), the second transmission means (92) co-operating with the synchronization means (56, ).

7. The printing machine (2) according to claim 6, **characterized in that** the first transmission means (46, 58, 96, 98) comprise a drive disk (46) secured to a drive shaft (44) adapted to turn the drive disk (46), a pivot wheel (58) secured to the drive disk (46), a crank (96) secured to the manipulator arm (20) and provided with a guide slot (98) extending radially relative to the pivot axis (A-A'), the guide slot (98) being adapted to co-operate with the pivot wheel (58) to turn the manipulator arm (20) during the terminal rotation stages (70, 71) and during the intermediate rotation stage (72).

8. The printing machine (2) according to claim 7, **characterized in that** the second transmission means (92) include an angle transmission (92) disposed in the manipulator arm (20) having one end carrying the gripper clamp (22) and having its other end connected to the synchronization means (56, 74, 84) for driving the angle transmission (92) in order to turn the gripper clamp (22) during the terminal rotation stages (70, 71) and the intermediate rotation stage (72).

9. The printing machine (2) according to claim 8, **characterized in that** the synchronization means (56, 74, 84) include a cam path (56) formed in the drive disk (46), the cam path (56) including at least one end portion (64, 66) presenting a shape adapted to cause the angle transmission (92) to turn relative to the manipulator arm (20), and **in that** the synchronization means (56, 74, 84) include a drive carriage (74) supporting a control wheel (84) slidably received in the or each middle portion (68) to drive the carriage (74) in translation relative to the support structure (18) and to prevent the gripper clamp (22) from turning relative to the manipulator arm (20) during the terminal rotation stage (70, 71).

10. The printing machine (2) according to claim 7, **characterized in that** the cam path (56) includes at least one middle portion (68) presenting a shape adapted to drive the carriage (74) in translation relative to the support structure (18) and to turn the gripper clamp (22) relative to the manipulator arm (20) during the intermediate rotation stage (72).

11. The printing machine (2) according to any of the preceding claims, **characterized in that** the gripper clamp (22) comprises:
· a support element (104);
· two jaws (107, 108) mounted on the support element (104) and movable in translation along an axis perpendicular to the tilt axis (B-B'); and
· means (110, 112) for moving the jaws (107, 108) in translation in order to take hold of and/or to release the article (9).

12. The printing machine (2) according to claim 11, **characterized in that** the gripper clamp (22) further includes at least two indentations (114, 116) each presenting a specific profile adapted to co-operate with the particular shape of an article (9) and formed in pieces having means for being secured to the jaws (107, 108).

13. The printing machine (2) according to claim 14, and including a transfer device (15) of the type according to claim 4, the printing machine (2) being **characterized in that** it includes at least one guide cylinder (32) secured to the frame (4) and provided with a guide shoe (40), and **in that** the drive means (23) of the transfer device (15) include third transmission means (52) for transmitting movement in translation of the support structure (18) relative to the frame (4), the third transmission means (52) including a groove (52) formed in the edge face (54) of the drive disk (46) and provided with at least a first segment (62) extending axially relative to the drive shaft (44), the guide shoe (40) being adapted to engage in the first segment (62) of the groove (52) to move the support structure (18) relative to the frame (4) in translation parallel to the pivot axis (A-A') during the stage (124) of movement in translation.

14. The printing machine (2) according to claim 13, **characterized in that** the groove (52) includes a second segment (60) that is circular and concentric with the drive shaft (44), and **in that** the guide shoe (40) is adapted to engage in the second segment (60) of the groove (52) during the terminal rotation stage (70, 71) and the intermediate rotation stage (72) to allow the support structure (18) to be held in position while allowing the manipulator arm (20) to move in rotation.

15. A method of transferring an article (9) between first and second locations in a printing machine (2) according to any one of claims 1 to 14, **characterized in that** it comprises the following steps:
· at least one terminal rotation stage (70, 71) during which the manipulator arm (20) is driven in rotation about the pivot axis (A-A') while the gripper clamp (22) is stationary relative to the tilt axis (B-B');
· an intermediate rotation stage (72) during which the manipulator arm (20) is driven in rotation about the pivot axis (A-A') and the gripper clamp (22) is driven in rotation about the tilt axis (B-B'); and
· a stage (124) of movement in translation during which the support structure (18) is moved towards and away from the frame (4) in translation parallel to the pivot axis (A-A'), the manipulator arm (20) is stationary relative to the pivot axis (A-A'), and the gripper clamp (22) is stationary relative to the tilt axis (B-B').

16. A method according to claim 15, including a printing machine (2) of the type according to claim 8, **characterized in that** it includes a stage (120, 130) of moving the jaws during which the jaws (107, 108) are moved in translation to take hold of or to release the article (9), and during which the manipulator arm (20) is stationary relative to the pivot axis (A-A') and the gripper clamp (22) is stationary relative to the tilt axis (B-B').
